# EUROPEAN PATENT APPLICATION

(11) **EP 3 647 375 A1**
(43) Date of publication of application: **06.05.2020**
(21) Application number: 18203162.5
(22) Date of filing: 29.10.2018
(51) Int. Cl.: C09D 5/00, B05D 5/08, C09D 5/16, C09D 5/24, C09D 5/32, C09D 7/62, C09D 7/40

(54) **SURFACE COATING MATERIAL, CURED SURFACE COATING AND USE HEREOF**

(71) Applicant: Ventus Engineering GmbH, 1030 Wien (AT)
(72) Inventor: LÜBKER, Poul Anker Skaarup, 6340 Baar (CH); MINGALIEV, Shavkat, 1010 Wien (AT)
(74) Representative: Tellefsen, Jens J.

(57) **Abstract**

The present invention relates to a general concept for improving a surface by use of a new surface coating material.

## Description

### Field of the Invention

The present invention relates to a general concept for improving a surface by use of a new surface coating material.

### Background of the Invention

Surface properties of a device or structure may have a significant influence on parameters such as lifespan, productivity, maintenance, suitable operation conditions, and installation sites, amongst others. The surface properties may therefore have a significant influence on suitable use and annular yield of the device or structure.

Durability of a device or structure may highly depend on the durability of the surface of the device or structure.

Especially long-term use in harsh conditions may cause wear and tear on the surface or parts thereof. The wear and tear may be mechanically induced, e.g. stress; or due to weather conditions, such as changes in temperature, extreme temperatures; as well as exposure to chemical conditions or radiations, just to mention some factors that may impact the durability of a surface.

Maintaining a surface may be a demanding task that is both labour intensive and time consuming, not only the task itself but also in the preparative and subsequent work of planning the maintenance, transporting personnel and materials to and from a site, or transporting the device or structure itself.

The device or structure may include production machinery of various kinds, and the maintenance may in such cases also include significant downtime of the machinery with reduced output on a yearly basis. The overall wear and tear for production machinery may include daily abrasion.

The extent of the tasks related to maintaining a surface may cause extensive considerations and calculations in regard to weighing the risk of more severe damages contra performing maintenance well in advance of the actual need.

Postponing maintenance may lead to more severe damage of the surface leading to breakdown or extensive repairs on the device or structure, which may increase daily costs for maintaining and/or repairing, and may reduce the lifespan productivity of the structure.

For many structures, some areas may be more exposed to wear and tear than other areas and may therefore require a more sustainable surface. Sustainable surfaces may require special materials which may increase initial costs of the construction and change the properties of the structure. The changed properties may result in increased weight of the construction or require new production methods or construction methods related to the structure.

Thus, some of the challenges in developing more durable surfaces relate to optimizing materials used for individual parts.

Durability is only one example of a significant parameter of a structure.

Another issue could be causing disturbance or inconvenience for the surroundings. Disturbance in the surroundings may be caused by noise, light and/or signals such as radar and sonar signals, mechanical vibrations, amongst others. Such disturbances may depend on surface properties of the structure or parts thereof and may be enhanced or reduced by altering the surface properties.

Productivity may be another significant parameter where the surface properties, such as the shape of the surface, the roughness of the surface, absorption of, or adsorption to a surface may increase the productivity of a structure.

### Object of the Invention

It is an object of this invention to overcome one or more of the aforementioned shortcomings of the prior art. One specific object is to provide means for selected functionalities of selected surface areas.

### Description of the Invention

The aforementioned aspects may be achieved by a surface coating material adapted to be deposited onto a substrate. The surface coating material may be configured to be curable into a surface coating after being deposited onto the substrate. The surface coating material may comprise one or more functionalized graphene-based materials and a carrier material. The surface coating may be a functionalized graphene-containing material, which provides a functional surface area.

In one aspect, the surface coating material may comprise additional materials that the cured surface coating, such as solvents or curing agents which evaporates.

In one aspect, the surface coating material may comprise lattice structures, chemical bonds or structures being different from the cured surface coating or in other ways differ from the cured surface coating. The difference between the surface coating material and the cured surface coating may be due to contained materials such as curing agents, diluents, solvents or a transformation of state of the material by sintering, evaporation, settling. These examples are merely provided as such and may include comparable materials or curing methods.

The substrate may include surfaces or surface areas of a structure such as buildings, cranes, wind turbines, mobile units such as vessels, aircrafts, automobiles, working machinery such as cutting devices, rotating devices amongst others. These examples are merely provided as such and can include comparable structures, machinery and devices. In the following the general terms structure, device or device structure are used at random.

Graphene can be a one-atom-thick layer of carbon atoms arranged in a honeycomb (hexagons or chicken-wire) crystal lattice.

Graphene-based materials may be functionalized with different side groups for different properties. The number of side groups per carbon atoms may differ depending on the functionalization and/or which properties to achieve. Functionalized graphene-based materials may be in dry powder form, liquid or ink - these being inexhaustible examples.

The functionalized graphene-based materials may have superior properties such as for example large surface area, mechanical stability, tuneable electrical and optical properties making it advantageous for use in surface coating materials. The properties further includes that it can be stronger than steel, can have a thin two dimensional structure, can be highly conductive, highly malleable, stretchable and with further properties of being transparent, flexible, hydrophobic, light absorbing, radar-absorbent, sonar-absorbent and impermeable.

Graphene-based materials may be structured, designed or presented in a number of ways: Porous wherein a number of carbon atoms are lacking in the structure, it may be stacked or folded to form 3D structures, the lateral size may be varied.

Graphene-based materials and functionalized graphene-based materials may respectively be referred to as source graphene-based materials and functionalized source graphene-based materials.

A method for functionalization of the graphene-based materials may comprise the following acts:
- choice of graphene-based materials,
- selection of appropriate chemical side-group(s), and
- level and/or density of functionalization.
this being an inexhaustible example.

Functionalized graphene-based materials are extremely diverse materials, and may be embedded in a matrix additive host/carrier material to be used in material compositions matrix of intermediate or host/carrier materials to produce different materials with various significantly improved properties turning the mix into a high-performance functionalized graphene-containing material. The host/carrier material may have more than one functionalized graphene-based material added, depending on which one or more properties are required to be synthesized into the functionalized graphene-containing material.

Hence, functionalized graphene-containing material may encompass one or more host/carrier material and one or more functionalized graphene-based material(s).

The ratio for functionalized graphene-based materials comprised in the functionalized graphene-containing material depends on the host/carrier material and the properties to be achieve for the functionalized graphene-containing material.

Correctly functionalized graphene-based materials have a unique ability to give its attributes to the matrix of intermediate or host/carrier materials. The functionalization may bring that the graphene-based materials' rough texture expands thereby creating a significant surface area. The planar structure of functionalized graphene-based materials create a significant surface inducing a large contact area with the host/carrier material because both the top and bottom surfaces of a graphene sheet are in close contact with the host/carrier material. The host/carrier material may be the material in the matrix binding to the functionalized graphene-based material.

In one aspect the graphene-based material may be functionalized to bond tightly with surrounding polymers, improving interfacial load transfers and boosts the surface area in contact with the polymers.

Moreover, the aspect ratio (ratio between a lateral dimension and the thickness of the graphene sheet) of a single graphene sheet can reach more than 2000. The surface area of a single graphene sheet can theoretically reach 2600 m2/g which may provide a significant amount of potential sites for advantageous chemical or physical interactions. This may accordingly improve bonding between graphene sheet(s) and host/carrier material.

One effect of this embodiment may be that the surface coating adds one or more new surface functionalities to the structure or device to which it is deposited. An alternative effect may be that the surface coating improves surface functionalities already present for the structure or reduces unwanted surface functionalities. Yet an alternative effect may be that the unwanted surface functionalities of a structure can be suppressed or eliminated by use of the surface coating.

This may be advantageous in regard to optimizing the 'core materials' used for the structure or device having other functionalities important for the actual functionality of the structure or device without considering the surface functionality of the core materials.

Another advantage may be to use the surface coating as a protective layer to increase the durability of the structure or device.

In one aspect, requested surface functionalities may not be obtainable by the core materials generally used for specific structures or devices and may be provided by the surface coating. In other cases, certain core materials may be used for a structure or device which is not optimal for the actual use but which provides a more durable surface and thus a material being a compromise balancing the use and the durability of the structure or device.

A further advantage may be to use off the shelf materials as the core material and use the coating for incorporating additional functionalities, thereby it may be achieved to reduce cost by use of commonly available materials and/or well proven fabrication methods connected with theses off-the-shelf or commonly available materials.

Functionalized graphene-containing material may have the same properties already present in the core materials used for a structure or device. But the functionalized graphene-containing material may provide a higher level of that given property and thus, use of the surface coating material of the invention may have the effect of adding to the properties already present in the structure using a smaller amount of material and thus maintaining the overall level of e.g. strength, stiffness, toughness and/or flexibility or the like by reducing the amount of the core material with a higher amount that the surface coating to replace it thereby achieving an overall reduction in the weight of structure or device. This may be advantages in regard to that a reduced deflection/bending of a part or the entire structure may achieve for reduced fatigue and thus prolonged lifetime. Further advantages may be mitigating the risk of cracks in the part and/or the entire structure in general achieving more damage-tolerant structures. Mitigating the risk of damages or increasing the damage-tolerance may generally result in reduced service costs and extend lifetime.

Reduced weight may for other devices or structures be advantageous in regard to reduce energy consumption in the daily use of the device e.g. vessels, aircraft or comparable devices. Reduced weight may in general be advantageous in regard to reduce energy consumption for transportation of especially large and/or heavy devices or structures.

The embodiment may have the effect that the functionalized graphene-containing material may provide for multiple functionalities to achieve a multi functional surface area. This may be achieved by use of a functionalized graphene-based material providing for several functionalities alone or in combination with the carrier material e.g. being electrical conductive and having a hydrophobic surface, being heat conductive and having a hydrophobic surface, having a high stiffness and being electrical conductive, being radiant absorbent and having a hydrophobic surface amongst others. Possible functionalities are elaborated on in the following, which may be provided for in combinations.

Alternatively, multiple functionalities may be achieved by comprising one or more functionalized graphene-based material(s) in the functionalized graphene-containing material which may then provide a multi functional surface area. The functionalized graphene-based materials may each providing for a functionality alone or in combination with the carrier material e.g. each functionalized graphene-based material may providing for a functionality in line with one of those described above.

In general, the effect of the embodiment may be that the functionality of the functional surface area may be linked to the properties of functionalized graphene-based materials comprised in the functionalized graphene-containing material. The layer functionality may arise due to a combination of properties of functionalized graphene-based materials. Alternatively, the layer functionality may arise due to a combination of properties of the functionalized graphene-containing material and the substrate material onto which the surface coating is deposited and thereby achieving new surface functionalities to a structure or device.

Another effect of the embodiment may be the surface coating may be deposited to a part of or the entire surface of a structure or device after the device structure is constructed and even after installation. This may be advantageous in regard produce general purpose structures or devices which may be designed for specific uses or installation sites by depositing a surface coating with requested functionalities. The coating may be applied to the surface of the entire structure or to specific areas. Furthermore, different surface coating may be applied in different areas of the structure to provide different surface functionalities in these different areas.

In one aspect the surface coating material may be deposited onto a substrate already comprising a surface coating or a surface coating material. In one aspect these surface coatings or surface coating materials may have different functionalities.

In the case of depositing a subsequent layer or pattern of surface coating material to a coated substrate, the surface conditions of the substrate should be taken into consideration. The pre-deposited coating material may be completely cured before depositing subsequent surface coating material. In other cases the pre-deposited coating material may only be semi-cured or not cured at all. This may have different effects depending on the nature of both the pre-deposited coating material and the subsequent deposited surface coating material.

If a pre-deposited coating material is fully cured before subsequent deposition of a surface coating material, it may have the effect that the surface coating materials do not mix between layers, and thus when subsequently cured, the coatings may also not be mixed between layers. Alternatively, one effect may be that the subsequently deposited coating may comprise compounds which soften or dissolve parts of the fully cured pre-deposited coating, such that an intermediate zone or boundary is achieved comprising a mix of coating materials in the subsequently cured surface coating.

If a pre-deposited coating material is only semi-cured or not cured at all before subsequent deposition of a surface coating material, it may have the effect that the surface coating materials mix between layers. This mix may be in the form of patterns of one surface coating material in another surface coating material, and thus, when subsequently cured the coatings may be mixed into one layer but in preserved patterns. Alternatively, one effect may be that the subsequently deposited and the pre-deposited surface coating materials mix, such that an intermediate zone or boundary is achieved comprising a mix of the coating materials in the subsequently cured surface coating.

In one embodiment the surface coating material may be pourable before deposition. The surface coating material may be curable on the substrate, being curable into a surface coating providing a functional surface area.

One effect of this embodiment may be that the surface coating material may be applied after construction and/or installation as the curing is performed after deposition to the surface. Another effect is that the surface coating material may be deposited on substrates with a broad range of forms and shapes. This may have the advantage of being a multipurpose use surface coating material.

In one embodiment the surface coating material may be a resin, foam, paint, liquid, ink, combinations thereof, or a matrix comprising one or more thereof.

The effects and advantages are according those already mentioned, namely that the surface coating material may be applied after construction and/or installation as the curing is performed after deposition to the surface. Another effect is that the surface coating material may be deposited on substrates with a broad range of forms and shapes. This may have the advantage of being a multipurpose use surface coating material.

An objective of the invention may be achieved by a method of making the surface coating material of the invention. The method may comprise an act of providing a carrier material. The method may further comprise an act of mixing one or more functionalized graphene-based materials with the carrier material to form the surface coating material.

The effect and advantages have already been touched upon in the description of functionalized graphene-based materials and how these materials may be embedded and used in a matrix additive host/carrier material for a high-performance functionalized graphene-containing material. Hence, effects included herein may be to achieve surface coating materials, which may be pourable before deposition and cured afterwards. Another effect may be to achieve a surface coating material with one or more functionalized graphene-based material added, depending on which one or more properties are required to be synthesized into the functionalized graphene-containing material; and hence, with the previously described advantages thereof.

An objective of the invention may be achieved by a surface coating deposited on a substrate. The surface coating may be a functionalized graphene-containing material providing a functional surface area.

The effect and advantages of this embodiment may be in line with those already touched upon in the description of the surface coating material which may be curable into a surface coating.

In one embodiment the surface coating may be obtained by a process of providing the surface coating material of the invention. The process may further comprise depositing the surface coating material on a substrate. The process may further comprise curing the deposited surface coating material on the substrate.

One effect of this embodiment may be that the surface coating may be obtained on the construction or device after the construction and/or installation of such as the curing occurs after deposition of the surface coating material to the surface. Another effect is that the surface coating may be obtained on substrates with a broad range of forms and shapes. This may have the advantage of being a surface coating as a multi shape/form material.

In one aspect, the surface coating may be obtained by the process wherein the surface coating material is deposited by spraying using a nozzle, by painting using a brush or a paint roller, or any combination thereof.

One effect of this embodiment may be that standard equipment known from the coating and/painting industry may be used. This may have the advantage of using off-the - shelf equipment and that skilled persons within the service of coating and/or painting may easily adapt their work processes to include the service of providing the surface coating according to the invention.

In one aspect, the surface coating may be obtained by the process wherein the surface coating material is deposited by dipping units into the surface coating material.

In one aspect, the surface coating may be obtained by the process wherein the surface coating material is deposited by pouring the surface coating material onto the substrate.

In one aspect the substrate may be a foil, fabric, film amongst others. In a further aspect, the substrate may be suitable for a continuous process wherein the substrate is continuously fed into the process e.g. as a continuous web of foil, fabric, film amongst others.

In one embodiment the surface coating may be obtained by the process wherein the substrate is provided as a continuous web and the surface coating materials deposited on the substrate in a continuous coating process. The coating process may be automated. The coating process may include depositing the surface coating material in patterns.

The term continuous coating process may refer to a coating process which may be performed as an ongoing and/or inline process.

The continuous web may comprise a foil, fabric, film amongst others.

One effect of this embodiment may be that a continuous process may be achieved where a pre-fabricated material web may be coated with the surface coating thereby achieving an improved or different surface functionality to the pre-fabricated material web. The coated web material may then afterwards be applied to a device or structure. Furthermore, this embodiment has the further effect that the coated pre-fabricated web may be coated in a subsequent process for intensifying or adding further surface functionalities to the already coated pre-fabricated web.

In the case of depositing a subsequent layer or pattern of surface coating material to a coated substrate, the surface conditions of the substrate should be taken into consideration. The pre-deposited coating material may be completely cured before depositing subsequent surface coating material. In other cases the pre-deposited coating material may only be semi-cured or not cured at all. This may have different effects depending on the nature of both the pre-deposited coating material and the subsequently deposited surface coating material.

If a pre-deposited coating material is fully cured before subsequent deposition of a surface coating material, it may have the effect that the surface coating materials do not mix between layers, and thus when subsequently cured, the coatings may also not be mixed between layers. Alternatively, one effect may be that the subsequently deposited coating may comprise compounds which soften or dissolve parts of the fully cured pre-deposited coating, such that an intermediate zone or boundary is achieved comprising a mix of coating materials in the subsequently cured surface coating.

If a pre-deposited coating material is only semi-cured or not cured at all before subsequent deposition of a surface coating material, it may have the effect that the surface coating materials mix between layers. This mix may be in the form of patterns of one surface coating material in another surface coating material, and thus when subsequently cured the coatings may be mixed into one layer but in preserved patterns. Alternatively, one effect may be that the subsequently deposited and the pre-deposited surface coating materials mix, such that an intermediate zone or boundary is achieved comprising a mix of the coating materials in the subsequently cured surface coating. The surface coating material may be applied by applications means such as a nozzle for spraying, drop casting, or comparable coating processes. Alternative processes such as dip coating, painting using rotating drums or comparable techniques may be used.

The deposition may include levelling of the coating using means such as rolls or rotation drum before the surface coating material is cured to form the surface coating

In one embodiment of the surface coating the functional surface area may be hydrophobic.

One effect of this embodiment may be to mitigating building up a surface adhering water layer on the structure or device surface. This may be advantageous in regard to preventing excess weight on the structure from a thin layer of water.

A similar effect of this embodiment may be to mitigate the build-up of ice on the surface of the structure or device thereby achieving no or considerably less need for de-icing. A further advantage may be no or considerably less safety risk due to ice falling of the structure being thrown of the blades. Yet a further advantage may be no or considerably less maintenance in regard to de-icing. This may especially be relevant for mobile or moving devices or structures such as aircrafts, wind turbines, cranes amongst others.

Another effect of this embodiment may be in regard to submerged or semi-submerged mobile devices where a hydrophobic surface may reduce the friction between the surface and the water thereby increasing speed and/or reducing energy consumption when in use.

Furthermore, a hydrophobic surface may reduce fouling on vessels which may reduce the maintenance considerably and reduce the damages caused by such fouling.

A highly hydrophobic surface with a sufficient strength may be especially relevant to prevent fouling and reducing scores in the surface to obtain a surface with a degree of self-cleaning by the water stream achieved when in motion.

In one embodiment of the surface coating the functional surface area may be radiant absorbing, including light absorbing, radar signal absorbing and/or sonar absorbing. The functional surface area may be radiant absorbing for both pressure waves and electromagnetic waves. Hence, the radiant absorbing functionality may include the ability to absorb light, radar and sonar signals.

The effects and advantages of this embodiment may include amongst others considerably reducing or completely eliminating reflection of waves from the functional surface area. This may cause a reduction in visual pollution and noise scattered from devices and structures and may be especially advantageous in regard to installation sites close to or in inhabited areas. Inhibited areas may refer to areas inhibited by man, animal or both.

One effect of this embodiment may be to considerably reduce or completely eliminate light reflections from structures or devices this may include reflection of the sun which may cause temporary blindness for observes. This may be advantageous in regard to safety in situation where the observer operates moving devices.

For example, visual pollution is a continuously relevant issue for wind turbines, where reflections in periods may be the cause for down-time in the operation. Thus, reduction of reflections for wind turbines may be advantageous in regard to achieving new locations for on-shore wind turbines closer to inhabited areas.

Another effect may be a reduction in reflection of other radiation such as radar- or sonar signals.

A reduction or completely elimination of radar reflections may be an advantage in regard to installation sites close to airports and other sensitive areas. Today, specific structures and especially wind turbine blades are extremely reflective to radar energy. This energy can cause problems not only for the radar, but also for the radar operators watching the display.

Reducing the reflection of sonar and radar signals may be beneficial for installations close to sensitive areas, where these installations may not be of primary interest.

In one embodiment of the surface coating the functional surface area may be heat and/or electrically conductive.

One effect of this embodiment may be to incorporate a lightning conductor system into the device structure by use of the layered structure. This may be advantageous in regard to achieving new ways to design lightning protection systems.

Alternatively, the conductor system could be used as a heating system, e.g. by using Ohmic heating.

Functionalized graphene containing material may have a high electrical and heat conducting capacity which may be suitable for de-icing systems.

A further effect of the embodiment may be that the conductor system may be designed with improved electro-static properties and act as anti-static roots to discharge and divert anti-static away from vulnerable areas.

In one aspect, the conductive structure may be connected to a controlled power source which is powered on/off according to defined climatic conditions. One effect of this embodiment may be to achieve de-icing systems to be activated when there is icing on the device structure. Another effect may be achieving a de-icing system which may be activated under certain climatic conditions to prevent an accumulation of icing on the device structure. This may be advantageous in regard to achieving a low energy consumption de-icing system, where the passage of an electric current through a conductor produces heat, also known as Joule heating, Ohmic heating or resistive heating.

The surface coating may even provide a multiple-functional surface area. The surface functionalities may comprise heating and cooling functionalities in combination with lightning protection and protection against static electricity.

Hence, the embodiment of the surface coating where the functional surface area may be heat and/or electrically conductive may be advantageous in regard to:
- Supporting a more uniform curing process
- Supporting a de-icing system/process
- Supporting a lightning protecting system
- Supporting a static electricity protecting system.

In other aspects the functional surface area may have alternating functionalities, the functionalities being altered by applying a current or a voltage to the surface coating. This may for example include the change from a dielectric material to a conductive material, from an opaque material to a transparent material, or from a resilient material to a hard material. These examples may be a few amongst others and may not be read as an exhaustive list.

In one embodiment of the surface coating the functional surface area may be environmentally resistive.

One effect of this embodiment may be to providing a surface functionality of increased strength, stiffness, toughness and/or flexibility. This may be advantageous in the regard to reducing deflection/bending of parts and thereby reduce fatigue with the benefit of a prolonged lifespan of the device or structure. Further advantages may be to limit the risk of cracks in the substrate surface and thus, in general to achieve a device or structure less prone to damage when the surface is intact. Limiting the risk of surface damage of the substrate may generally result in reduced service costs and lifespan extension.

Another effect of an environmentally resistive surface coating may be improved barrier properties of the surface such as a hydrophobic surface, a wear-resistant surface and/or an environmental-resistant surface. The improved barrier properties of the surface may prevent dirt, salt, and/or insects amongst others from sticking to the surface. This may further be advantageous in regard to reduced cleaning maintenance on the device structure. Aggregation of residues may begin to cause corrosion of the surface.

In one embodiment of the surface coating, the functional surface area may have a surface contour different from the surface contour of the substrate.

The surface contour may be defined as an actual outer surface area being different from the outlined area onto which the surface coating is applied. And thus, the actual outer surface area may depend on the surface contour. The actual surface area may also be defined as a surface contact area e.g. in connection with adsorption, absorption, adhesion or comparable chemical and/or physical interaction. In one aspect, the surface contour of may be that of a substantial 100% flat surface of the surface coating. In another aspect, the surface contour may comprise small waves in the surface coating. In yet another aspect, the surface contour may comprise large waves in the surface coating. Hence, the outer surface area may be different from the outline and, for example in a case with three surface contours as described above, going from as substantial flat surface to a surface contour with a large wave, may increase the actual outer surface area.

In one aspect of the embodiment the substrate may have a surface contour with waves and the surface coating applied to the substrate may have a substantial flat surface contour or vice versa with a substantial flat surface contour of the substrate and waves in the surface coating applied to the substrate.

In one aspect of the embodiment the surface contour of the substrate may simply be different than the surface contour of the substrate without significantly increasing or decreasing the actual outer surface of the substrate compared to that of the surface coating.

The surface contour may be defined or define a surface roughness or surface smoothness.

The effects of these embodiments may include that a different surface roughness or smoothness is provided to the structure in the area where the surface coating is applied. Hence, this may entail that a larger or smaller surface area is provided, compared to the actual surface area of the substrate. The may be advantageous in regard to changing the aerodynamic of the structure or parts of the structure.

In general, a changed surface contour may alter any flow characteristic at that surface and/or in the close vicinity of that surface which may cause less or more disturbances. Alternatively, a rougher surface may in some cases bring an increased adherence of external elements and in other cases bring a decrease in adherence of other external elements. Comparable advantages may be a smoother surface which in some cases may bring an increased adherence of external elements and in other cases bring a decrease in adherence of other external elements.

An objective of the invention may be achieved by a method for retrofitting a substrate comprising an act of depositing a surface coating material according to the invention to the substrate.

The deposition for the surface coating material may be in line with those previously described and thus the effects and advantages therefore.

In one aspect the retrofitting may be a method applied for new or existing devices or structures.

In one aspect the retrofitting may include repair of existing devices or structures.

One effect of this embodiment may be that a device or structure may be retrofitted using different coating thickness, different percentages of functionalized graphene-based material in the functionalized graphene-containing material , and/or different types of functionalized graphene-based material in the functionalized graphene-containing material used in specific surface areas.

Another effect may be that a device or structure may be retrofitted by applying a surface coating in different locations/areas of the device or structure depending on the requested functionality.

An objective of the invention may be achieved by use of the surface coating material according to the invention on a substrate.

In one aspect, the surface coating may comprise one or more functionalities. These may include one of or a combination of the following:
- Providing an increased surface area,
- Providing a surface roughness/smoothness,
- Providing high mechanical stability,
- Providing tunable electrical properties,
- Providing optical properties,
- Providing high conductivity,
- Providing high malleability,
- Providing stretchable properties
- Providing transparent properties,
- Providing flexible properties,
- Providing radiant absorbing properties, e.g. light absorbing, radar absorbing, sonar absorbent, sound absorbing,
- Being impermeable to radiant energy in specified intervals.

The possible surface functionalities obtained by the above-described exemplary embodiments may open op for further effects, such as mass production of device structures to be used for different purposes by simply using a surface coating with a given surface functionality.

This could for example be in connection with boats, skies or surfboards where a given surface strength or wearability may be beneficial but also where a smooth surface may be sought for racing purposes and/or for the purpose of reduced energy consumption due to reduced friction between the surface and the surroundings.

Reduced energy consumption due to reduced friction between the surface and the surroundings may also be highly relevant for application of the surface coating in the airspace industries, where the surface coating may be applied to the wings, blades and/or body of a flying construction e.g. a plane, a helicopter, drones or comparable constructions. The friction caused by a surface may be designed for special purposes and may also be relevant for related applications such as paragliders or the like.

Furthermore, the possibility of altering the surface functionality after production or installation may open up for new designs of known device structures or use of different materials for the device structures.

Another effect of the surface coating already touched upon may be that mass produced devices or structures may be adapted for specific installation sites or use by applying different configurations of the surface coating with appropriate surface functionality without incorporating new intermediate acts in the production process of the actual device or structure.

Yet another effect of the surface coating may be that the different coating thickness or different percentages of functionalized graphene-based material or different types of functionalized graphene-based material in the functionalized graphene-containing material may be used, thereby achieving individual properties for individual surface areas.

Use of the surface coating may also provide for better electrical conductivity. This may be advantageous in regard to achieving a low energy consuming heating system, where the passage of an electric current through a conductor produces heat, also known as Joule heating, Ohmic heating or resistive heating. This may be advantageous in regard to achieving formation of chemical bonds in a hardening process, and thus improved final performance and longevity of the surface coating.

The effects and advantages of the use of a functionalized graphene-containing material in a surface coating may be in line with those previously described in connection with the surface properties of the invention.

An objective of the invention may be achieved by a vessel comprising a surface coating according to the invention.

Improved surface functionality due to application of a surface coating may be especially relevant for marine applications for parts being semi-submerged and fully submerged.

In the case of semi-submerged part this concerns the parts being at water level, where the collision with ice and other floating elements may cause score in the construction, which may evolve to severe damage of the construction. A surface coating with improved surface strength may preclude or reduce the damage inflicted on the substrate face being the surface protected by the layered structure.

In the case of submerged parts, an improved surface strength may also be highly relevant in relation to collision similar to the semi-submerged parts.

An objective of the invention may be achieved by a structure comprising a surface coating according to the invention.

A change in surface functionality could also be interesting in connection with compliance to restrictions in certain geographical areas. This could be in connection with installation of wind turbines, cranes or comparable device structures close to airports, where a radiant absorbent surface may be required in order to not affect the signalling by reflections.

Alternatively, a highly radiant reflective surface may be useful for other device structures and sites. This may be advantageously achieved by use of an appropriate surface coating to an off-the-self device structure.

### Description of the Drawing

Embodiments of the invention will be described in the figures, whereon:
Fig. 1 illustrates one embodiment of a surface coating material and a surface coating on a substrate.
Fig. 2 illustrates one embodiment of a roadmap to reach functionalized graphene-containing material.
Fig. 3 illustrates one embodiment of a method of making a surface coating material.
Fig. 4 illustrates one embodiment of depositing a surface coating material and achieving a surface coating.
Fig. 5 illustrates one embodiment of a process of obtaining the surface coating.
Fig. 6 illustrates different uses of the surface coating.

### Detailed Description of the Invention

| **Item** | **No** |
|---|---|
| 10 | surface coating material |
| 12 | Pourable |
| 14 | Curable |
| 20 | surface coating |
| 30 | substrate |
| 40 | functionalized graphene-based materials |
| 42 | Graphene-based material |
| 50 | functionalized graphene-containing material |
| 60 | carrier material |
| 70 | functional surface area |
| 90 | Continuous web |
| 92 | Device/structure |
| 100 | Use |
| 110 | vessel |
| 120 | Structure |
| 200 | process |
| 210 | providing |
| 220 | depositing |
| 230 | curing |
| 302 | method of making |
| 304 | method for retrofitting |
| 310 | Providing |
| 320 | Mixing |
| 400 | Method for functionalization |

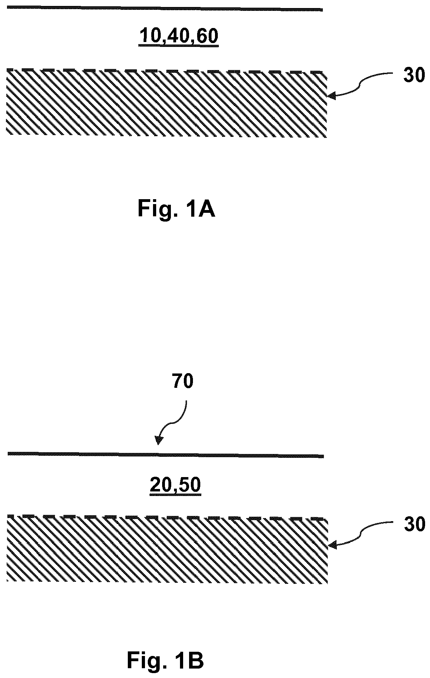

Figure 1 illustrates one embodiment of a surface coating material 10 deposited on a substrate 30 and of the cured surface coating 20 on the substrate 30. Figure 1A illustrates the surface coating material 10 comprising one or more functionalized graphene-based materials 40 and a carrier material 60. The surface coating material 10 is deposited on a substrate 30. Figure 1B illustrates the resulting surface coating 20 being a functionalized graphene-containing material 50. The surface coating 20 has a functional surface area 70.

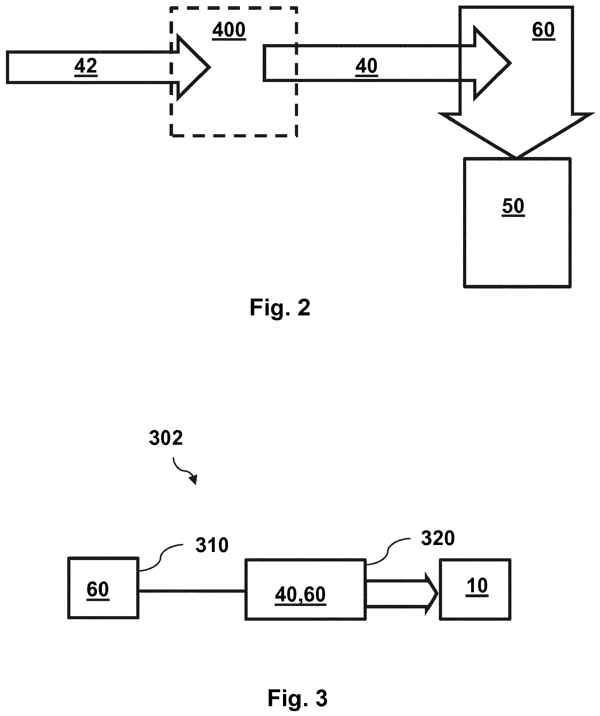

Figure 2 illustrates one embodiment of the roadmap to reach functionalized graphene-containing material 50. Graphene-based material (42) is functionalized using a method or process for functionalization (400) resulting in a functionalized graphene-based material 40. The functionalized graphene-based material 40 is/are mixed with host/carrier material 60 resulting in functionalized graphene-containing material 50.

Figure 3 illustrates one embodiment of the method of making 302 a surface coating material 10. The method 302 comprises an act of providing 310 a carrier material 60. The method 302 furthermore comprises an act of mixing 320 one or more functionalized graphene-based materials 40 with a carrier material 60. The mixing of the materials 40, 60 result in the surface coating material 10.

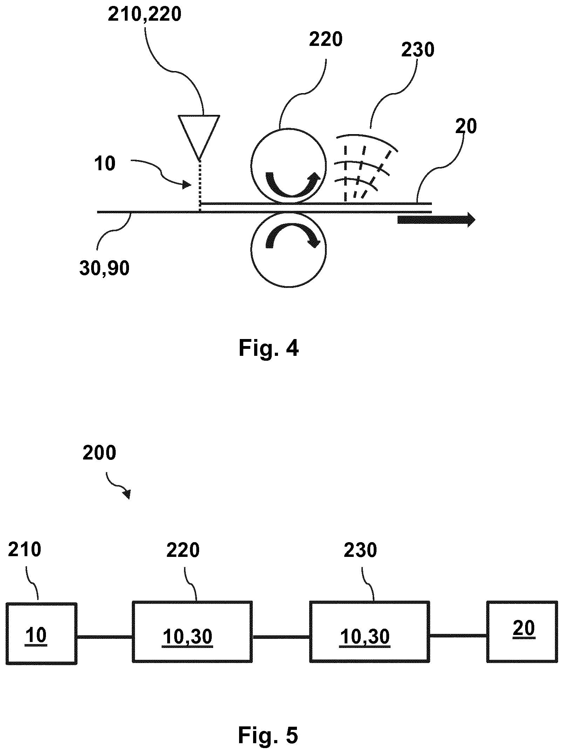

Figure 4 illustrates one embodiment of depositing 220 a surface coating material 10 and achieving a surface coating 20. The surface coating material 10 may be provided 210 in a pourable state and deposited 220 onto the substrate 30. The substrate may be a continuous fed substrate into the process e.g. a continuous web 90 of foil, fabric, film amongst others.

The surface coating material 10 may be applied by applications means such as a nozzle for spraying, drop casting, or comparable coating processes. Alternative processes such as dip coating, painting using rotating drums or comparable techniques may be used.

In the illustrated embodiment the deposition (220) includes levelling of the coating using rotation drum means before the surface coating material 10 is cured 230 to form a surface coating 20. The bold arrows indicate motion directions.

Figure 5 illustrates one embodiment of the process (200) of obtaining the surface coating 20. In the process (200) includes an act of providing 210 the surface coating material. The surface coating material is then deposited 220 on a substrate 30 and cured 230 on the substrate 30.

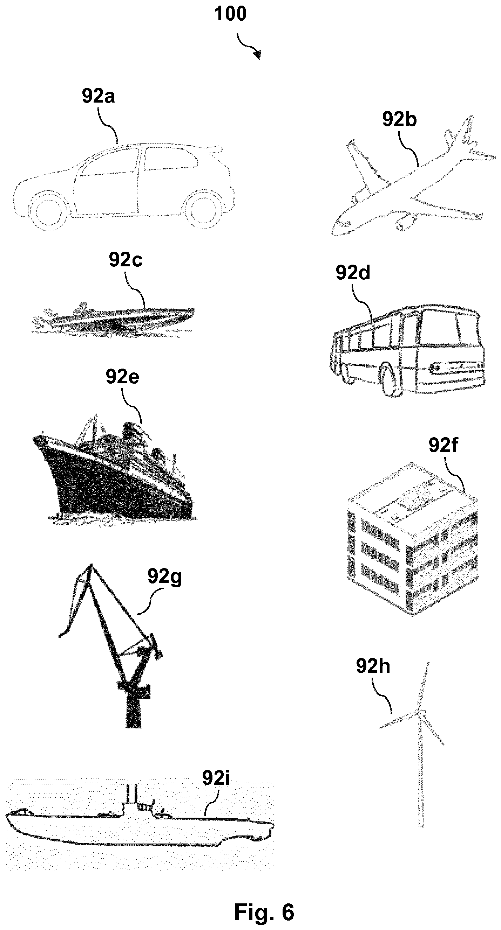

Figure 6 illustrates different uses (100) or applications of the surface coating/surface coating material. The surface coating material may be applied to diverse devices or structures 92 to provide them with a surface coating providing a functional surface. The surface coating material may only be applied in limited areas depending on the functionality of the resulting surface coating. The application may be in the marine industry including ferries (92e), container ships, speed boats (92c), submarines (92i) amongst others. The applications may include operating structures and machinery including cranes (92g) and wind turbines (92h) amongst others. The applications may include other transporting or moving devices such as cars (92a), busses (92d), airplanes (92b), other devices for land based transportation or other devices used in the aerospace industry. Furthermore the application may include fixed installations such as buildings (92f).

## Claims

1. A surface coating material (10) adapted to be deposited onto a substrate (30) and configured to be curable into a surface coating (20) after being deposited onto the substrate (30), the surface coating material (10) comprising one or more functionalized graphene-based materials (40) and a carrier material (60), the surface coating (20) being a functionalized graphene-containing material (50) providing a functional surface area (70).

2. The surface coating material (10) according to claim 1 being:
- Pourable (12) before deposition, and
- Curable (14) on the substrate (30) into a surface coating (20) providing a functional surface area (70).

3. The surface coating material (10) according to any one of the preceding claim being a resin, foam, paint, liquid, ink, combinations thereof, or a matrix comprising one or more thereof.

4. A method of making (302) a surface coating material (10) according to any one of the preceding claim, the method (302) comprising acts of:
- Providing (310) a carrier material (60), and
- Mixing (320) one or more functionalized graphene-based materials (40) with the carrier material (60) to form the surface coating material (10).

5. A surface coating (20) deposited on a substrate (30), the surface coating (20) being a functionalized graphene-containing material (50) providing a functional surface area (70).

6. A surface coating (20) according to claim 5 obtained by a process (200) of:
- providing (210) a surface coating material (10) according to any one of claims 1-3;
- depositing (220) the surface coating material (10) on a substrate (30), and
- curing (230) the deposited surface coating material (10) on the substrate (30).

7. A surface coating (20) according to claim 5 obtained by the process (200) according to claim 6 wherein the substrate (30) is provided as a continuous web (90) and the surface coating material (10) is deposited on the substrate (30) in a continuous coating process.

8. A surface coating (20) according to any one of claims 5-7, wherein the functional surface area (70) is hydrophobic.

9. A surface coating (20) according to any one of claims 5-8, wherein the functional surface area (70) is radiant absorbing, including light absorbing, radar signal absorbing and/or sonar absorbing.

10. A surface coating (20) according to any one of claims 5-9, wherein the functional surface area (70) is heat and/or electrically conductive.

11. A surface coating (20) according to any one of claims 5-10, wherein the functional surface area (70) is environmentally resistive.

12. A surface coating (20) according to any one of claims 5-11 wherein the functional surface area (70) has a surface contour different from the surface contour of the substrate (30).

13. A method for retrofitting (304) a substrate (30) comprising an act of depositing a surface coating material (10) according to any one of claims 1-3 to the substrate (30).

14. Use (100) of the surface coating material (10) according to any one of claims 1-3 on a substrate (30).

15. A vessel (110) comprising a surface coating according to any of claims 5-12.

16. A structure (120) comprising a surface coating according to any of claims 5-12.
